# EUROPEAN PATENT APPLICATION

(11) **EP 0 884 714 A2**
(43) Date of publication of application: **16.12.1998**
(21) Application number: 97307394.3
(22) Date of filing: 22.09.1997
(51) Int. Cl.: G09F 9/37, G02B 26/02

(54) **Electric display sheet**

(30) Priority: 10.06.1997 US 872264; 27.06.1997 EP 97304689
(71) Applicant: XEROX CORPORATION, Rochester, New York 14644 (US)
(72) Inventor: Sheridon, Nicholas K., Los Altos, California 94022 (US)
(74) Representative: Rackham, Stephen Neil

(57) **Abstract**

There is provided a display device comprising: a first non-conductive sheet (12); a second non-conductive sheet (14); a sealed passage means (13) between said first sheet (12) and said second sheet (14); said second sheet (14) having storage means (22) opening into said passage means (13); said first sheet (12) having electrode means (18); said second sheet (14) having electrode means (20) associated with said storage means (22); liquid means in said storage means (22); said liquid means being conductive; conductive means being in contact with said liquid means for providing electrical connection to said liquid means; a first insulating layer (24) insulating said electrode means (18) of said first sheet (12) from said liquid means; a second insulating layer (26) insulating said electrode means (20) of said second sheet (14) from said liquid means; and said electrode means (18) of said first sheet (12), said first insulating layer (24), said electrode means (20) of said second sheet (14), said second insulating layer (26), and said conductive means being so constructed and arranged relative to each other and said storage means (22) that when said electrode means (18) of said first sheet (12) , said electrode means (20) of said second sheet (14) and said conductive means are activated, an electric field will be generated which will cause said liquid means to flow into said sealed passage means (13).

## Description

This invention relates to electric display sheets and more particularly concerns an electric display sheet which utilizes a dyed liquid in a plurality of reservoirs in which the dyed liquid can be moved from each reservoir into an open space to generate a pixel of an image. The electric paper of this invention is disclosed under two approaches: electrocapillary display sheet and the capacitive energy display sheet.

Typically, a display device, in sheet form, comprises a thin sheet which has many attributes of a paper document. It looks like paper, has ambient light valve behavior like paper (i.e. the brighter the ambient light, the more easily it may be seen), is flexible like paper, can be carried around like paper, can be written on like paper, can be copied like paper, and has nearly the archival memory of paper.

There have been different approaches to make a field induced display sheet such as US Patent No. 4,126,854 titled "Twisting Ball Panel Display" in which the display panel is comprised of a plurality of spherical particles which have different colors on each hemisphere. Depending on the direction of an electric field applied to each spherical particle, one of the hemispheres will be displayed. In this approach, for black and white display sheets, each ball has a black hemisphere and a white hemisphere. The black and white hemispheres of the spherical particles can be selected in such a manner to display a desired image or text.

It is an object of this invention to provide a different approach to make a field induced display sheet.

There is disclosed an electric display sheet utilizing two different approaches. The first approach is based on electrocapillary concept and the second approach is based on the capacitive energy concept. Both approaches utilize three transparent sheets being spaced from each other and placed parallel to each other. The media sheet has a plurality of reservoirs which are filled with a dyed or pigmented ink.

In the electrocapillary display sheet, each one of the reservoirs has an individually addressable electric field. By activating each electric field, the ink from the corresponding reservoir flows out into the space between the medial sheet and one of the other two sheets in order to create a pixel. By selectively activating the electric fields, an image can be created on the electrocapillary display sheet of this invention.

In the capacitive energy display sheet, the medial sheet and one of the other sheets have a plurality of electrodes which are placed at the space between the two sheets. Each pair of electrodes (one from each sheet) correspond to a reservoir. By selectively activating each pair of electrodes a capacitive energy is created which causes the ink from the corresponding reservoir to flow into the space between the pair of electrodes. The ink between the electrodes will be viewed as a pixel. By selectively activating the pairs of electrodes, an image can be created on the capacitive display sheet of this invention.
Figure 1 shows a cross sectional view of an electrocapillary display sheet of this invention;
Figure 2 shows an example of a method of bonding different sheets of Figure 1 together;
Figure 3 shows a portion of the top view of the electrocapillary display sheet of Figure 1;
Figure 4 shows two same size droplets a and b of two different kinds of liquid on a surface;
Figure 5 shows the contact angle of a droplet of a liquid with respect to a surface;
Figure 6 shows the two droplets a and b of Figure 4 with their contact angles α1 and α2;
Figure 7 shows a droplet of a liquid which spreads into a space created by two parallel plates;
Figure 8 shows a droplet of a liquid which does not spread into a space created by two parallel plates;
Figure 9 shows that by applying a voltage to the droplet of a liquid, the contact angle of the droplet can be changed;
Figure 10 shows a droplet which is surrounded by air and has an acute contact angle;
Figure 11 shows the same droplet of Figure 10 which is surrounded by a different liquid and now `has an obtuse angle;
Figure 12 shows an alternative electrocapillary display sheet of this invention;
Figure 13 shows yet an alternative electrocapillary display sheet of this invention;
Figure 14 shows a portion of the top view of a color electrocapillary display sheet of this invention;
Figure 15 shows a cross sectional view of a capacitive energy display sheet of this invention;
Figure 16 shows an example of a method of bonding different sheets of Figure 15 together;
Figure 17 shows a top view of the capacitive energy display sheet of Figure 15; and
Figure 18 shows a cross section of a tub which contains an dielectric liquid.

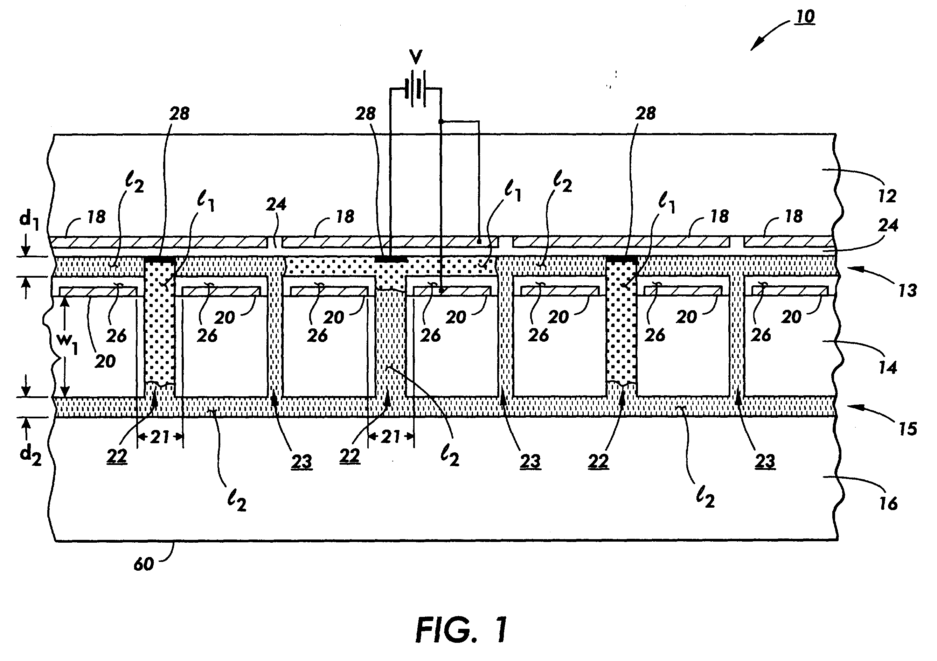

Referring to Figure 1, there is shown a cross sectional view of an electrocapillary display sheet 10 of this invention. The electrocapillary display sheet 10 comprises three transparent and insulating sheets 12, 14 and 16 such as glass or Mylar. Sheets 12, 14 and 16 are substantially parallel to each other and they are spaced from each other. The distance d₁ between sheet 12 and 14 and the distance d₂ between the sheets 14 and 16 both are in the range between 2.5 and 1250 micrometres (0.0001 and 0.05 inches). Hereinafter, for the purpose of simplicity, "electrocapillary display sheet" will be referred to as "display sheet".

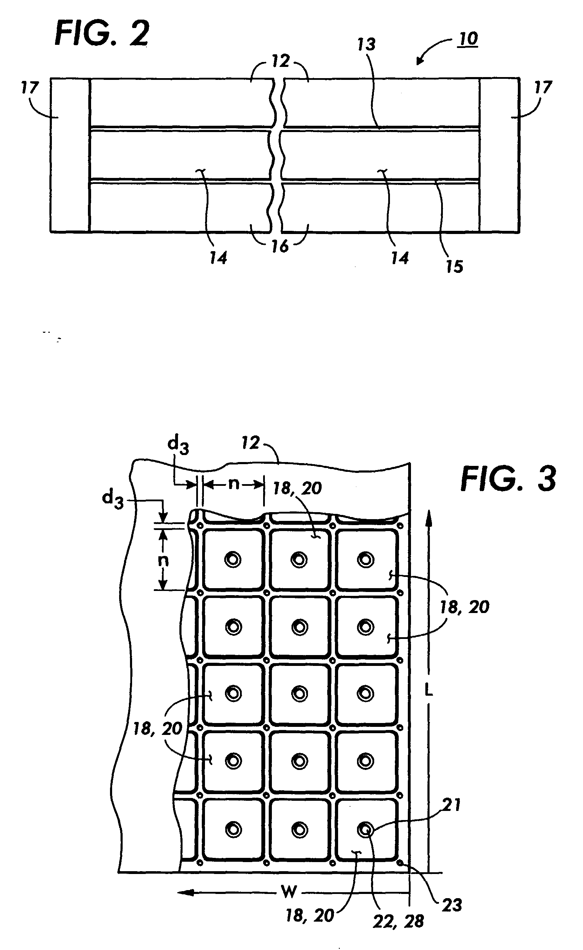

Referring to Figure 2, there is shown an example of a method of bonding sheet 12, 14 and 16 together. The sheets 12, 14 and 16 are suitably spaced from each other and bonded to a frame 17 that runs around the periphery of the display sheet 10. If the frame 17 and the sheets 12, 14 and 16 are glass, bonding might be done by means of a glass frit painted onto joining surfaces and subsequently heated to its melting temperature. The bonding might also be done with epoxy or some other bonding resin. If the sheets 12, 14 and 16 are all made of a plastic material, such as Teflon or mylar, the bonding might be a heat weld, accomplished by means well known in the art.

Since the frame 17 runs around the periphery of the display sheet 10, it seals the spaces 13 and 15 which are located between sheets 12 and 14 and sheets 14 and 16 respectively.

Referring back to Figure 1, a plurality of electrodes 18 are placed on sheet 12 where it faces sheet 14 and a plurality of electrodes 20 are placed on sheet 14 where it faces sheet 12. Electrodes 18 and 20 generally must be made from a transparent material such as Indium/tin oxide (ITO) or tin oxide. Electrodes 18 and 20 can be selected to have different shapes such as square or circular. However, the shape of both electrodes 18 and 20 have to be selected to be identical. In the preferred embodiment of this invention, both electrodes 18 and 20 are selected to be square with rounded corners. Each one of the electrodes 18 of sheet 12 is aligned with a corresponding electrode 20 from sheet 14.

Referring to Figure 3, there is shown a portion of the top view of the electrodes 18 of sheet 12. The electrodes 18 of sheet 12 are placed next to each other in such a manner that they form parallel lines both along the width W and the length L of the surface of sheet 12. The electrodes 18, of dimension n by n, are placed at a distance d₃ away from each other. Since each electrode has the same size as the size of a pixel, the dimension n is defined by the size of the pixels. Distance d₃ is in the range between 0.001n and 0.05n. Electrodes 20 of the sheet 14 have the same shape, size and arrangement as the electrodes 18 of sheet 12. Each electrode 20 has an opening at its center shown by circle 21 which is visible through the transparent electrode 18. The opening 21 can have any shape other than a circle.

Referring back to Figure 1, sheet 12, where faces sheet 14, has a layer 24 of low surface energy insulator. The low surface energy insulator layer 24, which is placed over the electrodes 18 of the sheet 12, covers the entire surface of the sheet 12. In the same manner, a low surface energy insulator layer 26, is placed over the electrodes 20 of the sheet 14. The low surface energy insulator layers 24 and 26 may be a layer of Teflon (tradename, DuPont Co.) or other perfluorinated polymer, bonded to the sheets 12 and 14 as a sheet or deposited by a sputtering or chemical vapor deposition process. They can also be a silicone elastomer such as Sylgard 184 (tradename, Dow Corning Co.). Furthermore, they may be a two or more layer structure such as Parylene (tradename, Union Carbide Co.) overcoated with a perfluorinated polymer such as Fluorad FC725 (tradename, 3M Co.).

Sheet 14 has a plurality of reservoirs (storage to hold liquid) 22. The reservoirs 22 are created by forming a hole, through the insulating layer 26 and the sheet 14 within the opening 21 of each electrode 20. The diameter or the size of the opening of each reservoir is smaller than the diameter or the size of the opening 21 of each electrode 20 in such a manner that once reservoirs 22 are created, the electrodes 20 are not exposed to their respective reservoir. Each reservoir extends through the thickness W₁ of the sheet 14. In addition, sheet 14 has a plurality of holes 23 which are formed to extend through the insulating layer 26 and the thickness W₁ of sheet 14 preferably where there is a space between four adjacent electrodes 20 of sheet 14. However, holes 23 can be placed at any location, where there is no electrodes 20. Holes 23 provide a communicating path between the sealed spaces 13 and 15.

In addition, a plurality of high surface energy plates 28 made from a material such as evaporated or sputtered gold, platinum, indium/tin oxide, or nickel are placed over the low surface energy insulator layer 24 of the sheet 12 only on the areas which are aligned to be above the reservoirs 22 of the sheet 14. In the preferred embodiment of this invention, the shape of the high surface energy plates 28 is the same as the shape of the cross section of the reservoirs which is a circle.

It should be noted that the electrodes 18 and 20, and the low surface energy insulators 24 and 26 are all transparent. The high surface energy plates 28 may also be transparent.

The reservoirs 22 are filled with dyed polar liquid l₁ such as water, alcohol, acetone, formamide, ethylene glycoy and mixtures of these and other suitable liquids.

The space (passage) 13 between the sheets 14 and 16, the space (passage) 15 between the sheets 12 and 14 and the holes 23 are filled with a low surface energy liquid l₂ such as Dow Corning 200 Series (tradename) silicone oil, Exxon Isopar (tradename) or 3M Fluorinert (tradename). The two liquids l₁ and l₂ are immiscible. The liquid l₂ may be clear, dyed or pigmented with a contrasting color to liquid l₁. The spaces 13, 15 and holes 23 may also be filled with a gas such as air.

Conductive liquids are polar and are generally miscible with one another. However, there are classes of non-conducting liquids that are not miscible with one another. Examples of these are the fluorocarbons, such as the 3M Fluorinerts (tradename), that are not miscible with most of the hydrocarbons, Dow Corning FS-1265 (tradename) oil is also not soluble in hydrocarbons or the 3M Fluorinerts (tradename).

The dyed polar liquid l₁ in each reservoir adheres to the high surface energy plates 28 above the reservoir. The high surface energy plate 28 not only serves the purpose of maintaining the placement of the conductive liquid adjacent to the addressing electrodes 18 and 20, but also serves as a means of making electrical connection to the conductive liquid l₁. Since the high surface energy plates 28 provide electrical connection to liquid l₂, hereinafter, "the high surface energy plate" will be referred to as "connection plate".

This invention is based on a concept called "electrocapillarity". The electrocapillarity relates to changes in surface tension as a function of an applied electric field which is discussed in 'Surface Chemistry', by Lloyd I. Osipow, 1962, Reinhold Publishing Co., New York". The structure shown in Figure 1 is designed to move the dyed polar liquid l₁ from one area into another by using effects related to the electrocapillary concept.

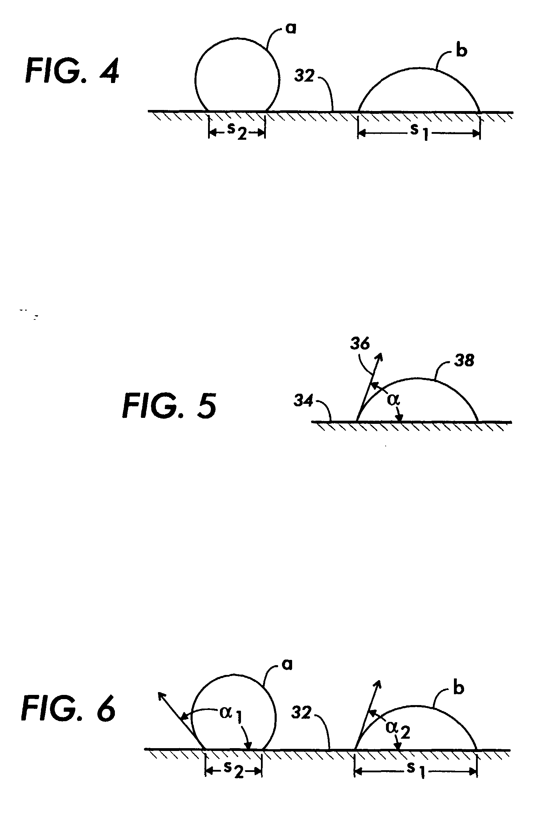

In order to comprehend the disclosed embodiment of this invention, it is necessary to study the electrocapillary concept. Referring to Figure 4, there are shown two same size droplets a and b of two different kinds of liquid on a surface 32. As it can be observed, droplet b is spread out and droplet a is beaded up. As a result, droplet b occupies a larger surface area S₁ than the surface area S₂ which the droplet a occupies. The reason for the different surface areas of the two liquids is that each liquid has a certain energy relationship with the surface which results in a specific contact angle with respect to a given surface. The lower the interaction energy between the liquid and the surface, the larger the contact angle and the less the shared area.

Referring to Figure 5, a contact angle α is an angle between the plane 34 of a surface and the tangent line 36 of a droplet 38 of a liquid. The contact angle of each liquid with respect to a given surface depends on the properties of that liquid for example, surface tension and the properties of the surface for example, surface energy.

Referring to Figure 6, there is shown the two droplets a and b of Figure 4 with their contact angles α₁ and α₂. Some liquids such as the liquid of droplet b have an acute contact angle α₂ which causes the droplet of that liquid to occupy a large surface S₁. However, some liquids such as the liquid of droplet a have an obtuse contact angle α₁ which causes a same size droplet of one of these liquids to occupy a much smaller surface S₂ than the surface area S₁ occupied by liquids with acute contact angles.

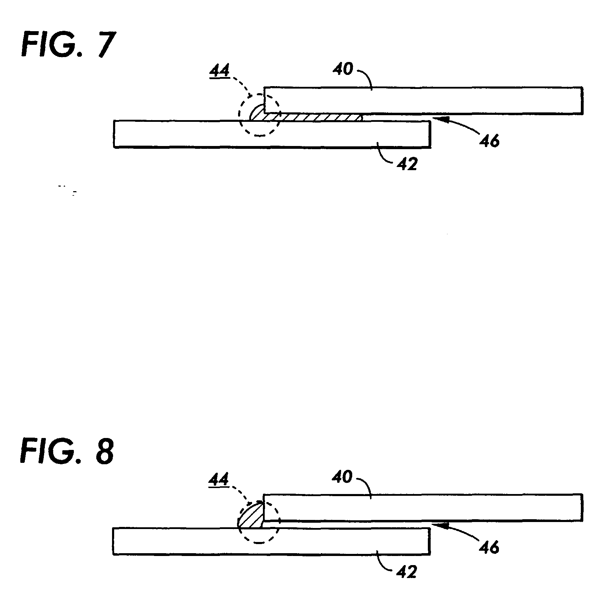

Referring to Figure 7, there is shown two plates 40 and 42 which are placed parallel and spaced from each other in such a manner as to create a step. Through extensive experiments, it has been determined that if a droplet of a liquid which has a contact angle less than about 95 degrees is placed in the corner 44 created by the step, the droplet will spread into the space 46 between the two parallel plates 40 and 42. However, referring to Figure 8, if the droplet of a liquid which has a contact angle above about 95 degrees is placed at corner 44, the droplet will not spread.

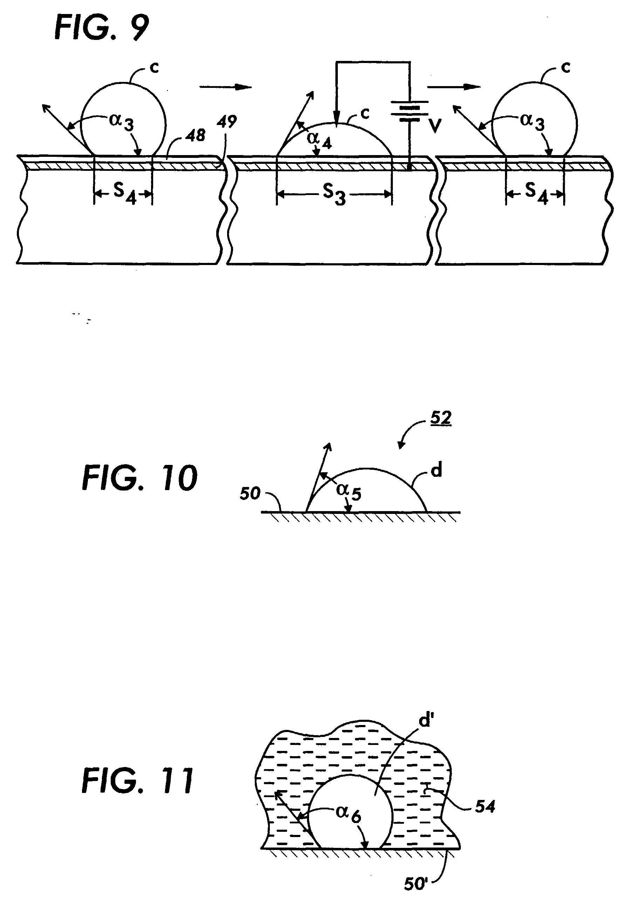

Furthermore, referring to Figure 9, through extensive experiments it has been determined that by applying a voltage V between a droplet c located on a thin insulative surface 48 and an electrode 49 (directly under the surface 48) an electric field is created which causes, the contact angle to be changed and, depending on the voltage applied to the liquid, the contact angle can be modified to a desired angle.

In Figure 9, from left to right, droplet c is shown prior to applying a voltage V, during application of a voltage V and after removal of the voltage V. As can be observed, prior to applying a voltage V the droplet c is beaded up and has an obtuse angle α3. During the application of the voltage V, the contact angle of droplet c changes to an acute angle α₄ and as a result, the droplet expands. After removal of the voltage V, the contact angle of the droplet changes to its original obtuse angle α₃ and as a result the droplet beads up again.

It should be noted that if the voltage is turned off, the charges remain in the droplet and the electrodes, as a result, the droplet will remain spread. However, if the droplet and the electrodes are discharged, then the liquid will bead up. In this specification the term "electric field is removed" shall mean "the liquid, its corresponding electrodes and electrical connection means to the liquid are discharged".

Modifying a contact angle from an obtuse angle α₃ to an acute angle α₄ causes the droplet c to occupy a larger surface area S₃ than its original surface area S₄ (the surface that a droplet occupies prior to the application of an electric field). Once the voltage is removed, the droplet c will contract back to its original shape and surface area S₄. The experiments have shown that by applying a voltage V to liquids such as water and mercury on a surface such as silicone elastomer that overcoat a conductor, their surface areas can increase by a factor of 10. Furthermore, by utilizing surfaces such as Teflon coated Parylene, the surface areas of water or mercury can increase by a factor in the range between 20 and 30.

The concept of increasing the surface area of a liquid by applying a voltage has been used in this invention to expand the surface area of a dyed liquid in order to fill a surface area on demand.

In the preferred embodiment of this invention, the contact angle of the dyed polar liquid l1 with respect to the low surface energy insulator is selected to be more than 90 degrees. It is well known that the contact angle of a first liquid with respect to a surface is greatly enhanced if a second liquid, with a lower surface tension and immiscbile with the first liquid, is present. This phenomenon is shown in Figures 10 and 11.

In Figure 10, a droplet d of a liquid is placed on surface 50. The droplet d which is surrounded by air 52 has an acute contact angle α₅. However, in Figure 11, droplet d' which is the same as the droplet d of Figure 10 is surrounded by a different liquid 54 and placed on the surface 50' which is the same as surface 50 of Figure 10. In Figure 11, as can be observed, liquid 54 has caused the droplet d' to have an obtuse angle α₆. This effect can be utilized to greatly increase the number of polar liquid/low energy surface combinations which is very useful in the practice of this invention.

Referring back to Figure 1, in operation, an individual voltage source which generates a voltage V is applied to each pair of electrodes 18 and 20 and to their corresponding liquid l₁ through the connection plate 28. It should be noted that for the purpose of simplicity, only the connection of one pair of electrodes 18 and 20 and their corresponding connection plate 28 to a voltage V is shown. However, it should be noted that an individually addressable electric field is applied to each pair of electrodes 18 and 20 and their corresponding connection plate 28. When an individual voltage V is applied to electrodes 18 and 20 and their corresponding connection plate 28 an electric field is being generated between the electrodes 18 and 20 (electrodes 18 and 20 are activated) and their corresponding connection plate 28.

The voltage V can be either DC or AC. In the case of a DC voltage V, electrodes 18 and 20 are connected to the same polarity of the voltage V and the connection plate 28 is connected to the opposite polarity of the voltage V. Therefore, liquid l1, which receives its electrical connection through the connection plate 28, has the opposite polarity compared to the polarity of the electrodes 18 and 20.

In operation, once the voltage V is activated, the contact angle of the polar liquid l₁ with respect to the surfaces of the low surface energy insulators 24 and 26 decreases. It should be noted that low surface energy insulators 24 and 26 are over the electrodes 18 and 20 respectively. Therefore, the opposite polarity of liquid l₁ with respect to the polarity of the electrodes 18 and 20 directly under the low surface energy insulators 24 and 26 causes the contact angle of polar liquid l₁ to decrease. The decrease in the contact angle causes the polar liquid l₁ to be pumped into the space 13 between sheets 12 and 14.

The dyed polar liquid l₁ occupies the space 15 only within the perimeters of the electrodes 18 and 20. As the expanding liquid l₁ approaches the perimeters of the electrodes 18 and 20, the strength of the electric field between this liquid l₁ and the electrodes 18 and 20 falls off, causing the contact angle of liquid l₁ with respect to the surfaces of the low surface energy insulators 24 and 26 to increase. This increase in contact angle will cause the further expansion of the liquid to cease.

When the liquid l₁ moves into the space 13, it causes the liquid l₂ in the space 13, holes 23 and the space 15 to move and flow into the reservoirs 22 from the opening of the reservoir into the space 15 in order to equilibrate the liquid l₁ and the liquid l₂.

Once a voltage V is activated, the dyed polar liquid l₁ occupies the area between electrodes 18 and 20 and therefore the area between electrodes 18 and 20 will be seen as a colored pixel or subpixel. By removing the electric field created by the voltage V, the contact angle of the liquid l₁ with respect to the surfaces of the low surface energy insulators 24 and 26 increases, causing the dyed polar liquid l₁ to retreat back to the reservoir where it adheres only to the connection plate 28 which it wets. Once an electric field is removed, since the dyed polar liquid retreats back to the reservoir, the area under that electrode will be seen as a clear area. The diameter of the reservoir and therefore, the diameter of the high energy connection plate 28 is small enough to make the dyed polar liquid l₁ within the reservoirs 22 invisible. Therefore, by activating and removing the proper electric fields, an image can be displayed on the electrocapillary display sheet 10.

The voltage required to create an electric field adequate to move the liquid from the reservoirs is in the range between 5 volts and 300 volts.

The electrocapillary display sheet 10 requires a constant application of a pattern of addressing voltages V in order to continuously display an image. An active matrix addressing circuit can provide such a retained voltage pattern.

In order to utilize the electrocapillary display sheet 10 of this invention as a paper surrogate, the bottom surface 60 of sheet 10 has to be either coated with a material of a contrasting color compared to the color of the polar liquid l₁ or brought into contact with such a surface. If a light color is selected for the bottom surface 60 and the dyed polar liquid is selected to be dark, the electrodes 18 and 20 with an activated field will appear as dark pixels or subpixels depending on the size of the electrodes 18 and 20. However, the electrodes 18 and 20 with a removed electric field will appear as clear pixels. For example, if the dyed polar liquid l₁ is dyed black and the surface 60 is coated white, then the electrodes 18 and 20 with an activated electric field will appear as black on a white background. The electrodes 18 and 20 with a removed electric field will appear as white since the white background can be seen through the clear electrodes 18 and 20. This will have the physical appearance of black ink on white paper.

It should be noted that since the size of the reservoirs are very small in the range between 0.1% and 10% of the area of the pixel, the ink in the receivers is substantially invisible.

Furthermore, the electrocapillary display sheet 10 of this invention can be utilized as a transparent display to be placed on a projector to project the image of the electrocapillary display sheet 10 onto a screen. Therefore, on the screen only the projected image of the electrodes 18 and 20 with an active electric field will be seen as dark pixels or subpixels depending on the size of the electrodes. The electrodes with a removed electric field appear clear and the light passing through these electrodes forms a bright image on the screen.

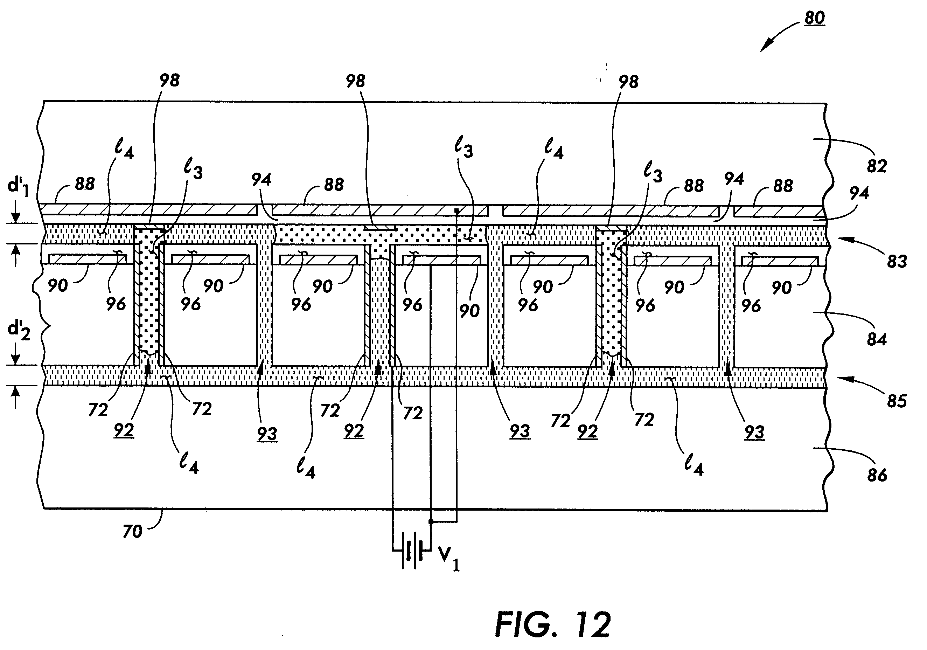

Referring to Figure 12, there is shown yet another alternative electrocapillary display sheet 80 of this invention. In Figure 12, the elements 82, 83, 84, 85, 86, 88, 80, 92, 93, 94, 96, 98, l₃ and l₄ are the same and serve the same purpose as the elements 12, 13, 14, 15, 16, 18, 20, 22, 23, 24, 26, 28, l₁ and l₂ of Figure 1 respectively. In Figure 12, the connection plates 98 are no longer used to provide electrical connection to liquid l₃. However, they are placed above the reservoirs in order to cause the liquid l₃ to rise and adhere to the plates 98. Instead of the connection plates 98, a conductive coating 72 is placed on the walls of the reservoirs 22 via plating or any other well known methods which will be used to provide electrical connection to liquid l₃.

In Figure 12, the voltage V₁ is applied to electrodes 88 and 90 and their corresponding liquid l₃ through the conductive coating 99. The electrodes 88 and 90 are connected to the same polarity of the voltage V₁ and the conductive coating 99 which provides the electrical connection to liquid l₃ is connected to the opposite polarity of the voltage V₁.

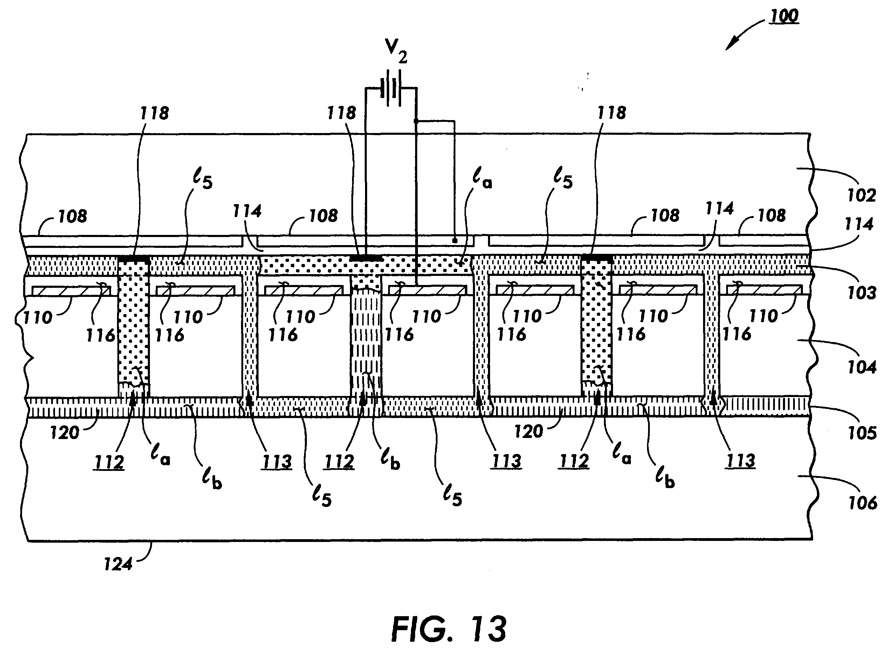

Referring to Figure 13, there is shown yet another alternative electrocapillary display sheet 100 of this invention. In Figure 13, the elements 102, 103, 104, 105, 106, 108, 100, 112, 113, 114, 116, 118 and l₅ are the same and serve the same purpose as the elements 12, 13, 14, 15, 16, 18, 20, 22, 23, 24, 26, 28 and l₁ of Figure 1 respectively. In the electrocapillary display sheet 100, liquid l₁ of Figure 1 is replaced by two liquids la and la. Liquid la is a clear conductive liquid. However, liquid lb is a dyed or pigmented non-conductive liquid. Furthermore, liquids l5, la and lb are all immiscible liquids. Liquid lb is placed under liquid la in such a manner that once liquid la flows into the space 103 only in the area directly between the electrodes 108 and 110 and a portion of the reservoir 112 liquid lb is fully retreated into the reservoir 92.

In operation, once a voltage V₂ is applied to electrodes 108 and 110 and the connection plate 118, the conductive liquid la which is in contact with connection plate 118 spread into space 103 and fills the space between the electrodes 108 and 110. Once the liquid la flows out of reservoir 112, liquid lb moves into reservoirs 112. In the mean time, the liquid la will fill in the space 120 (within the space 105 directly under electrodes 108 and 110). Upon removal of the voltage V2, liquid la retreats back into reservoir 112 and therefore liquid lb flows out to fill the space 120 while pushing out the liquid l₅.

A viewer looking at the electrocapillary display sheet from the bottom surface 122, will see the dyed or pigmented liquid lb within the space 120 when the voltage V₂ is removed. Accordingly, the space 120 will be seen as a pixel in the color of liquid lb. However, when the voltage V₂ is activated, liquid lb retreats back into the reservoir 112 and clear liquid l₅ flows into the space 120. As a result, space 120 will be seen as a clear pixel.

Therefore, the electrocapillary display sheet 100 generates a pixel when an electric field created by an applied voltage V₂ is removed and it clears a pixel when an electric field is created by the applied voltage V₂. In contrast, the electrocapillary display sheet 10 of Figure 1 generates a pixel when an electric filed is created by an applied voltage V and clears a pixel when the electric field created by an applied voltage V is removed.

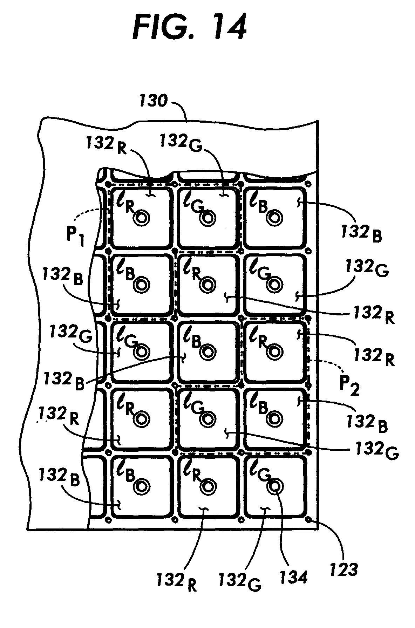

The electrocapillary display sheets 10, 80 and 100 can be modified to display full color images. Referring to Figure 14, there is shown a portion of the top view of a color electrocapillary display sheet 130. In this approach, by decreasing the size of each pair of electrodes 132 and 134 (under the electrode 132) and devoting three pairs of electrodes to each pixel and placing a different color ink (for example, red l_{R}, green l_{G} and blue l_{B}) in the reservoir of each pair of electrodes, a color electrocapillary display sheet 130 can be generated.

For example, each one of pixels P1 and P2 contains three pairs of electrodes (132_{R}, 134_{R}), (132_{G}, 134_{G}) and (132_{B}, 134_{B}). Electrodes (132_{R}, 134_{R}) contain red ink in their corresponding reservoirs, electrodes (132_{G}, 134_{G}) contain green ink in their corresponding reservoirs and electrodes (132_{B}, 134_{B}) contain blue ink in their corresponding reservoirs. In this approach once an electric field is applied to each pair of electrode and to the liquid in their corresponding reservoirs, the area under each pair of electrodes will create a different color subpixel and since each pixel has three pairs of electrodes, the combination of the three subpixels will appear as one colored pixel. Therefore, by selecting proper electrodes of each pixel, different colors can be created on each pixel. In this display 130, if the non-conductive liquid (the liquid outside of the reservoirs) is clear, the image will show pastel colors. If the non-conducting liquid is dyed black (for example) and the display is back-lit it will show images with a very wide color gamut.

Still another way of achieving color is to have a stack of 2 or more display sheets, one for each color and in pixel alignment, placed one above another. In this case, subtractive color dyes (cyan, magenta and yellow) are most suitable for use.

It should be noted that in both approaches of color electrocapillary display sheets disclosed in this specification, the red, blue and green inks can be replaced by any three complementary colors which can create the spectrum of colors.

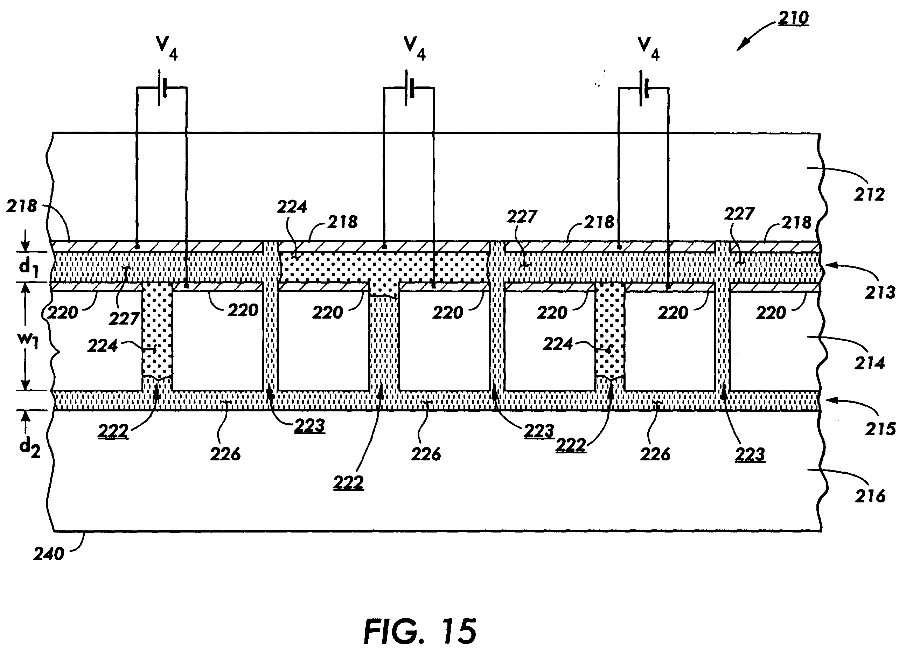

Referring to Figure 15, there is shown a cross sectional view of a capacitive energy display sheet 210 of this invention. The capacitive energy display sheet 210 comprises three transparent sheets 212, 214 and 216. Sheets 212, 214 and 216 are substantially parallel to each other and they are spaced from each other. The distance d₁ between sheet 212 and 214 and the distance d₂ between the sheets 214 and 216 are in the range between 0.0001 and 0.05 inches.

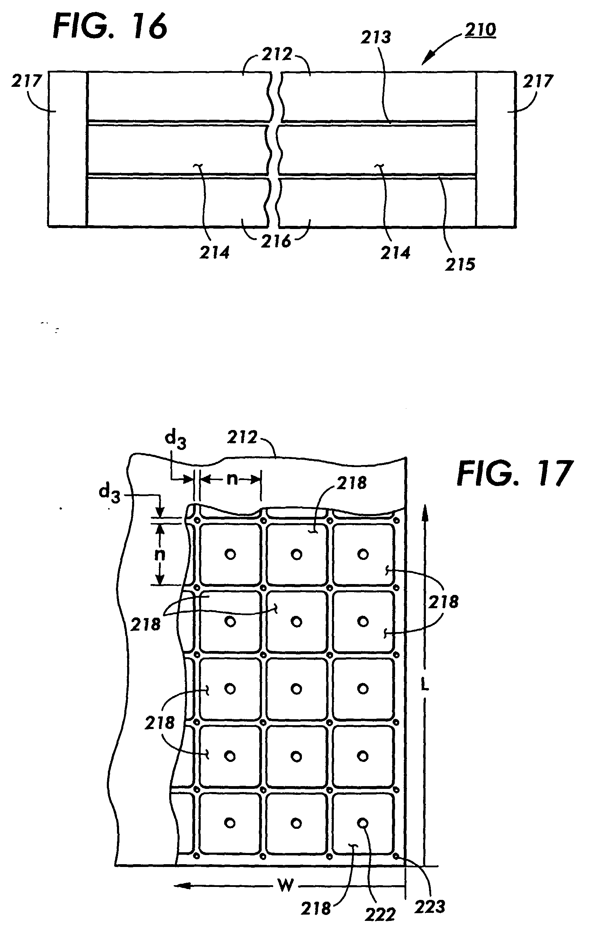

Referring to Figure 16, there is shown an example of a method of bonding sheets 212, 214 and 216 together. The sheets 212, 214 and 216 are suitably spaced from each other and bonded to a frame 217 that runs around the periphery of the display sheet 210. If the frame 217 and the sheets 212, 214 and 216 are glass, bonding might be done by means of a glass frit painted onto joining surfaces and subsequently heated to its melting temperature. The bonding might also be done with epoxy or some other bonding resin. If the sheets 212, 214 and 216 are made of a plastic material, such as Teflon or mylar, the bonding might be a heat weld, accomplished by means well known in the art. Once sheets 212, 214 and 216 are bonded together through the frame 217, a sealed space 213 between sheets 212 and 214 and a sealed space 215 between sheets 214 and 216 are created.

Referring back to Figure 15, a plurality of transparent electrodes 218 are placed on sheet 212 where it faces sheet 214 and a plurality of transparent electrodes 220 are placed on sheet 214 where it faces sheet 212. Transparent electrodes can be fabricated from ITO (indium/tin oxide), tin oxide, thin sheets of gold, etc. Electrodes 220 can be opaque and reflecting for some embodiments of this display, such as when the display is being used for some types of reflective readout. Electrodes 218 and 220 can be selected to have different shapes such as square or circular. However, the shape of both electrodes 218 and 220 would usually be identical. In the preferred embodiment of this invention, both electrodes 218 and 220 are selected to be square with rounded corners. Each one of the electrodes 218 of sheet 212 is aligned with a corresponding electrode 220 from sheet 214.

Referring to Figure 17, there is shown a top view of the capacitive display sheet 210. As it can be observed, electrodes 218 of sheet 212 are placed next to each other in such a manner that they form parallel lines both along the width W and the length L of the surface of sheet 212. The electrodes 218, of dimension n by n, are placed at a distance d₃ away from each other. Distance d₃ is in the range between 0.001n and 0.05n.

It should be noted that electrodes 220 of sheet 214, which are located under the electrodes 218 of the sheet 212, have the same shape, size and arrangement as the electrodes 218 of sheet 212.

Referring to both Figures 15 and 17, sheet 214 has a plurality of reservoirs (storage to hold liquid) 222. The reservoirs are created by forming a hole, preferably at the center of each electrode 220, through the width W₁ of the sheet 214. In Figure 17, the reservoirs 222 are shown as a circle at the center of the electrodes 218.

Sheet 214 also has a plurality of holes 223 through the width W1 of the sheet 214. The holes 223 are between the electrodes 220. The holes 223 provide a communication path between the space 213 and the space 215.

Referring back to Figure 15, the reservoirs 222 are filled with dyed or pigmented dielectric (non-conductive) liquid 224 such as Dow Corning series 200 silicone oil, Exxon Isopar, mineral oil, transformer oil, castor oil, etc. For the purpose of simplicity hereinafter, the "dyed or pigmented dielectric liquid" will be referred to as "ink". The ink 224 in each reservoir 222 may be over filled to adhere to the electrode 218 above the reservoir. However, it does not fill the space 227 between the electrodes 218 and 220 in the reset state. The space 213 and 215 and holes 223 are filled with a dielectric liquid 226 with a different dielectric constant than the ink 224. This liquid may be clear, dyed or pigmented with a contrasting color to liquid 224. The spaces 213, 215 and holes 223 may also be filled with a gas such as air.

This invention is based on a concept called "capacitive energy display". The structure shown in Figure 15 is designed to move the ink from one area into another by applying capacitive energy. The concept of moving dielectric liquids by means of electrical fields is discussed at length by Max Abraham and Richard Becker in their book entitled "The Classical Theory of Electricity and Magnetism", Second edition, Hafner Publishing /co., Inc. New York.

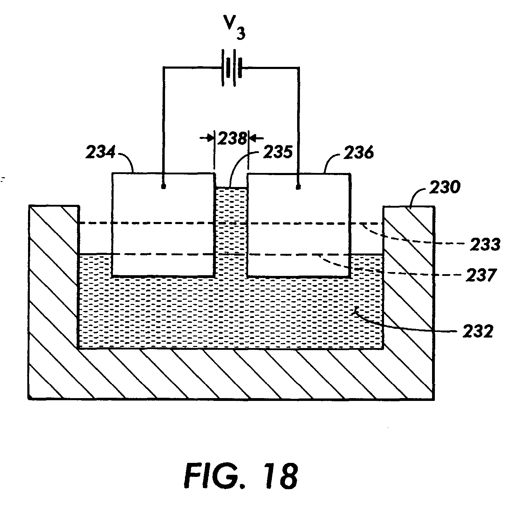

In order to comprehend the disclosed embodiment of this invention, it is necessary to study the concept of capacitive energy. Referring to Figure 18, there is shown a cross section of a tub 230 which contains an ink 232 (dielectric liquid). There are two conductors 234 and 236 placed within the tub 230 in such a manner that the ink 232 fills a portion of the space 238 in between plates 234 and 236.

In Figure 18, a voltage V₃ is applied between the two plates 234 and 236. In this example, the positive polarity is connected to plate 234 and the negative polarity is connected to plate 236. However, the order of connection of the polarities of the voltage V₃ to the plates 234 and 236 is immaterial.

Without applying the voltage V₃, the level of ink between the glass plates and outside of the glass plates is at level 233. However, once a voltage V₃ is applied to the two plates 234 and 236, a capacitive energy is created between the two plates 234 and 236 which causes the ink 232 in the space 238 between the two plates 234 and 236 to rise to level 235 which in return causes the level of the ink outside of the plates 234 and 236 to decrease to level 237. This concept has been used in this invention to move the ink and fill a surface area on demand.

Referring back to Figure 15, an individual voltage source which generates voltage V₄ is applied to each electrode 218 on sheet 212 and its corresponding electrode 220 on sheet 214 to create a capacitive energy between the electrodes 218 and 220. The voltage V₄ can be AC or DC. In the case of the DC voltage, the positive polarity of the voltage V₄ is connected to the electrodes 218 and the negative polarity of the voltage V₄ is connected to electrodes 220. These voltages may be reversed without affecting the operation of the display. All the voltage sources for voltages V₄ are individually addressable. Therefore, each pair of electrodes 218 and 220 can be activated independent of the rest of the electrodes.

It should be noted that in this specification, "activating an electrode" shall mean "activating the voltage source connected between the two corresponding electrodes" and "an inactive electrode" shall mean "the voltage connected between the two corresponding electrodes is removed".

In operation, without applying a voltage V₄ to each pair of corresponding electrodes 218 and 220, since the ink 224 is in the reservoirs 222, the space 227 between the electrodes 218 and 220 is seen as a clear area. The diameter of the reservoir 222 is small enough to make the ink in the reservoirs 222 low in visibility.

However, referring to Figure 15, in operation, a voltage V₄ is activated, the capacitive energy between the electrodes 218 and 220 causes the ink 220 to rise and flows into space 213 filling the space 227 between the electrodes 218 and 220. The ink 224 occupies the space 213 only within the perimeters of the electrodes 218 and 220 since outside of the perimeters of the electrodes there is no capacitive energy to attract the ink 224.

When the ink 224 moves into the space between electrodes 218 and 220, it causes the liquid 226 in the space 213, holes 223 and the space 215 to move and flow into the reservoirs 222 from the opening of the reservoir into the space 215 in order to equilibrate the ink 224 and the liquid 226.

Once an electrode is activated, since the ink 224 occupies the space between the electrodes 218 and 220 the space between the electrodes 218 and 220 will be seen as a colored pixel or subpixel. Therefore, by activating selective electrodes, an image can be displayed on the capacitive energy display sheet 210.

In order to utilize the capacitive energy display sheet 210 of this invention as a paper, the bottom surface 240 of sheet 216 can be either dyed with an opaque color other than the color used for the ink or surface 240 can be placed against an opaque surface with a color other than the color used for the ink 224.

With this approach, the activated electrodes will appear as dark pixels or subpixels depending on the size of the electrodes and the inactive electrodes will appear as clear pixels. For example, if the ink 224 is black and the surface 240 is white, then the activated electrodes will appear as black on a white background and the inactive electrodes will appear as white since the white background can be seen through the clear electrodes.

However, the display sheet 210 of this invention can be utilized as a transparent display to be placed on a projector to project the image of the capacitive energy display sheet 210 onto a screen. Therefore, on the screen only the projected image of the activated electrodes will be seen as dark or colored pixels or subpixels depending on the size of the electrodes and since the inactive electrodes appear clear, light passes through these inactive electrodes without projecting any image on the screen.

It should be noted that the oil based ink disclosed in the embodiment of Figure 15 can be replaced by a ferrofluid liquid.

In order to generate a color capacitive energy display sheet, the capacitive energy display sheet of Figure 15 can be modified to have the same arrangement as the arrangement shown in Figure 14.

It should be noted that in the color capacitive energy display sheet any three complementary colors which can create the spectrum of colors can be used as an ink.

## Claims

1. A display device comprising:
a first non-conductive sheet (12);
a second non-conductive sheet (14);
a sealed passage means (13) between said first sheet (12) and said second sheet (14);
said second sheet (14) having storage means (22) opening into said passage means (13);
said first sheet (12) having electrode means (18);
said second sheet (14) having electrode means (20) associated with said storage means (22);
liquid means in said storage means (22);
said liquid means being conductive;
conductive means being in contact with said liquid means for providing electrical connection to said liquid means;
a first insulating layer (24) insulating said electrode means (18) of said first sheet (12) from said liquid means;
a second insulating layer (26) insulating said electrode means (20) of said second sheet (14) from said liquid means; and
said electrode means (18) of said first sheet (12), said first insulating layer (24), said electrode means (20) of said second sheet (14), said second insulating layer (26), and said conductive means being so constructed and arranged relative to each other and said storage means (22) that when said electrode means (18) of said first sheet (12), said electrode means (20) of said second sheet (14) and said conductive means are activated, an electric field will be generated which will cause said liquid means to flow into said sealed passage means (13).

2. A display device comprising:
a first non-conductive sheet (12);
a second non-conductive sheet (14);
a sealed passage means (13) between said first sheet (12) and said second sheet (14);
said second sheet (14) having storage means (22) opening into said passage means (13);
said first sheet (12) having electrode means (18);
said second sheet (14) having electrode means (20) associated with said storage means (22);
liquid means in said storage means (22);
said liquid means being non-conductive; and
said electrode means (18) on said first sheet (12) and said electrode means (18) on said second sheet (14) being so constructed and arranged relative to each other and said storage means (22) that when activated, a capacitive energy between said electrode means (18) on said first sheet (12) and said electrode means (18) on said second sheet (14) is generated which causes said liquid means to flow into said sealed passage means (13).
